**Europäisches Patentamt**

**European Patent Office**

**Office européen des brevets**

(19)

(11) Veröffentlichungsnummer: **0 123 209**
**B1**

(12) **EUROPÄISCHE PATENTSCHRIFT**

(45) Veröffentlichungstag der Patentschrift:
23.07.86

(21) Anmeldenummer: **84104044.7**

(22) Anmeldetag: **11.04.84**

(51) Int. Cl.⁴: **B 62 D 55/20**

(54) Vorrichtung als Montagehilfe an Gleisketten für Kettenfahrzeuge.

(30) Priorität: 22.04.83 DE 3314685
17.02.84 DE 3405699

(43) Veröffentlichungstag der Anmeldung:
31.10.84 Patentblatt 84/44

(45) Bekanntmachung des Hinweises auf die Patenterteilung:
23.07.86 Patentblatt 86/30

(84) Benannte Vertragsstaaten:
AT CH DE FR GB IT LI NL SE

(56) Entgegenhaltungen:
EP-A-0 044 137
EP-A-0 052 772
DE-A-1 966 256
FR-A-2 347 253
GB-A-1 140 323
GB-A-2 009 685
GB-A-2 051 709
US-A-3 362 759

(73) Patentinhaber: **DIEHL GMBH & CO.,**
**Stephanstrasse 49, D-8500 Nürnberg (DE)**

(72) Erfinder: **Erlenmaier, Günter, Espenauer Strasse**
**20, D-3502 Vellmar 3 (DE)**
Erfinder: **Spies, Klaus, Damaschkestrasse 2, D-5630**
**Remscheid (DE)**

(74) Vertreter: **Hofmann, Gerhard, Dipl.- Ing.,**
**Stephanstrasse 49, D-8500 Nürnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER. STOCKHOLM 1986

## Beschreibung

Die Erfindung bezieht sich auf eine Vorrichtung als Montagehilfe an Gleisketten für Kettenfahrzeuge nach dem Oberbegriff des Anspruches 1.

Aus dem DE-U-19 83 855 ist eine Sicherungsvorrichtung an Gleiskettenverbindern bekannt, bei der sowohl Bolzen mit kreisförmigen als auch mit polygonen Querschnitten mittels Verbindern und Klemmschrauben festsetzbar sind. Die Bolzen weisen nahe ihrem Ende eine durchgehende, und zu dem Schlitz des Verbinders fluchtende Bohrung auf, in die vor dem Aufschieben des Verbinders ein Stift eingesteckt ist. Durch diesen Stift werden die Bolzen in ihrer richtigen Winkelstellung zueinander gehalten, so daß sich der Verbinder leicht aufbringen läßt. Die Justierung zweier Bolzen muß vor dem Aufbringen des Verbinders auf die Bolzen erfolgen. Das bedeutet, daß die Bolzen bezüglich ihrer Bohrungen koaxial ausgerichtet sein müssen und diese Bohrungen während des Einbringens des Sicherungsstiftes lagefixiert sein müssen. Dies erfordert eine besondere Fixiervorrichtung. Darüberhinaus ist es nachteilig, daß die üblicherweise in den Kettengliedern gummigelagerten Bolzen beim Einbringen des Sicherungsstiftes in den Kettengliedern elastisch nachgeben und demzufolge noch besonders fixiert sein müssen, um ein rasches Montieren des Sicherungsstiftes zu gewährleisten.

Erhebliche Probleme bereitet diese Montage unter feldmäßigen Bedingungen, da bekanntlich solche Vorrichtungen rauher Behandlung und Umgebung ausgesetzt sind.

Die Aufgabe der Erfindung besteht darin, eine Justiereinrichtung zu schaffen, die sowohl bei der fertigungstechnischen Montage von Kettensegmenten, als auch bei der feldmäßigen Montage eines kompletten Kettenstranges bzw. beim Austausch von Kettengliedern am Fahrzeug in einfacher und zeitsparender Weise zu handhaben ist.

Die Lösung dieser Aufgabe ist den kennzeichnenden Merkmalen des Anspruches 1 zu entnehmen.

Wesentlich ist für die Erfindung, daß durch eine konstruktiv und fertigungsmäßig einfache Maßnahme am Bolzen keinerlei zusätzliche Vorrichtungen notwendig sind, da bei der Montage des Verbinders dieser die Bolzen unter dem erforderlichen Montagewinkel fixiert.

Die an jedem Bolzen angeordneten Justierelemente sind kostengünstig herstellbar. Bei Bolzen, die einen kreisförmigen Querschnitt, kreisähnlichen Querschnitt oder einen polygonen Querschnitt aufweisen, sind die genannten, den Erfindungsgegenstand aufweisenden Bolzen sicher und lagegenau bezüglich Montagewinkel und Kontur mit dem Verbinder zu versehen. Die Bolzen können nicht mehr konturversetzt und damit kerbbruchgefährdet im Verbinder sitzen. Im Gelände bzw. am Fahrzeug ist die Montage der Verbinder problemlos, da die Justierelemente der Bolzen beim Aufschlagen bzw. Aufsetzen des Verbinders selbstjustierend wirken. Bezüglich des Montagewinkels ist auszuführen, daß in die Kettenkörper gummigelagerte Bolzen eingepreßt sind, deren Bolzenenden über Verbinder die einzelnen Kettenglieder zu einer Kette verbinden. Da die Gleiskette am Laufwerk eine bestimmte Umschlingung an Laufrollen, Umlenkrollen und Triebkränzen durchläuft, aber sich auch den Unebenheiten des zu befahrenden Geländebodens anpassen muß, werden von der Gummilagerung große positive und negative Verdrehwege zurückgelegt. Um eine hohe Lebensdauer der verdrehelastischen Gummilagerung zu erzielen, werden die Bolzen mit einem nach bestimmten Kriterien festgelegten Montagewinkel in die Kettenkörper eingepreßt. Diese Maßnahme ist sowohl bei der fabrikseitigen Herstellung von Kettensegmenten als auch beim Auflegen eines Kettenstranges bzw. beim Austausch von Kettenkörpern am Fahrzeug zu berücksichtigen. Ausführungsbeispiele der Erfindung sind in der Zeichnung dargestellt. Es zeigt:

Fig. 1 in zwei Ansichten einen Verbinder mit Bolzen für eine Zwei-Gelenkbolzen-Kette;

Fig. 2 einen Bolzen nach Fig. 1;

Fig. 3 einen Verbinder für Ein-Gelenkbolzen-Kette;

Fig. 4 bis 6 Bolzen mit verschieden ausgebildeten Justierelementen.

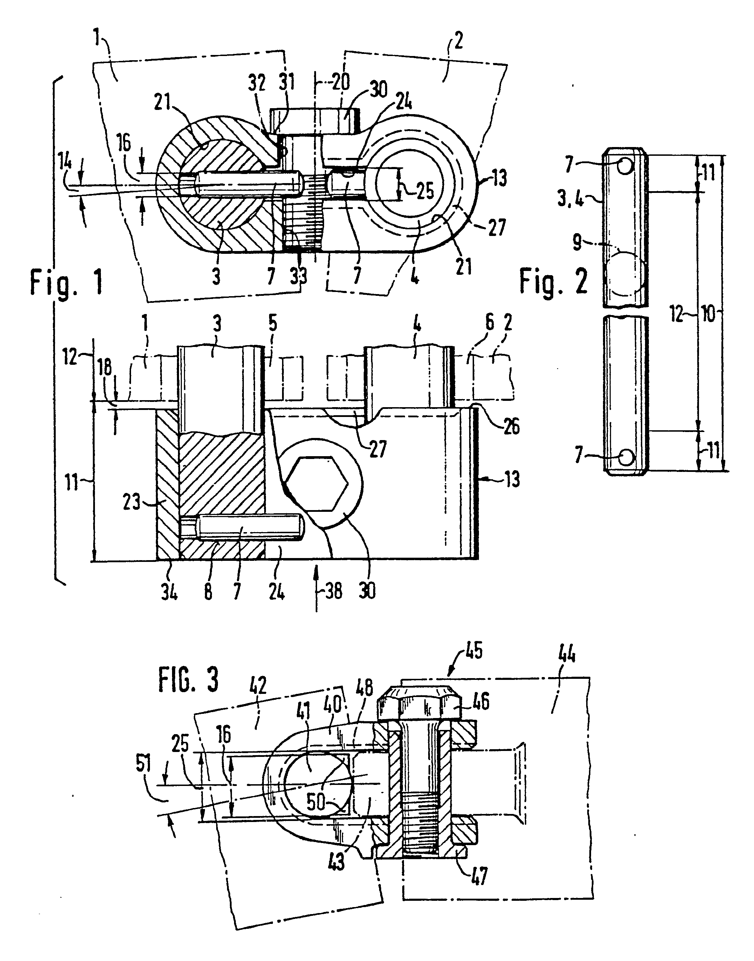

Nach Fig. 1 sind in strichpunktiert gezeichneten Kettenkörpern 1 und 2 einer Zwei-Gelenkbolzen-Kette Bolzen 3 und 4 mit bekannten Gummilagern 5 und 6 angeordnet. Die Bolzen 3 und 4 mit kreisförmigen Querschnitten 9 sind - siehe auch Fig. 2 - endseitig mit Querstiften 7 versehen. Diese Stifte 7 sind kraftschlüssig in entsprechend abgestufte Bohrungen 8 der Bolzen 3 und 4 eingesetzt. Die Bolzen 3 und 4 weisen über ihre gesamte Länge 10, also auch in den Bereichen 11 der Verbinder 13 und dem Bereich 12 der Gummilagerung 5 und 6 stufenlose, kreisförmige Querschnitte 9 auf.

Der Verbinder 13 ist bezüglich der Achse 20 symmetrisch ausgebildet. Er weist eine bestimmte Lagerart 21 auf, eine durch einen Schlitz 24 gegebene Spannmöglichkeit 25 und für eine Schraube 30 eine Fläche 31, eine Bohrung 32 und eine Gewindebohrung 33. In den Schlitz 24 ragen die Querstifte 7 mit geringem seitlichem Spiel. Diese Querstifte 7 liegen zwischen der Schraube 30 und der Außenfläche 34 des Verbinders 13.

In der kettenkörperseitigen Fläche 26 sind die Lageraugen 21 und der Schlitz 24 von einer konisch verlaufenden Führungsfläche bzw. Anfasung 27 umgeben.

Bei Montage des Verbinders 13 werden die mit den Querstiften 7 versehenen Bolzen 3 und 4 der Kettenkörper 1 und 2 in Bezug auf die Lageraugen 21 und den Schlitz 24 selbstjustierend ausgerichtet. Die Gummilager 5 und 6 fixieren in den gezeichneten Positionen die Bolzen 3 und 4 mit den Stiften 7 in den Kettenkörpern 1 und 2 entsprechend dem Montagewinkel 14. Der

Verbinder 13 wird auf die Bolzen 3 und 4 in Pfeilrichtung 38 geschoben. Die danach eingesetzte Schraube 30 setzt die Bolzen 3 und 4 im Verbinder kraft- bzw. reibschlüssig fest. Der Kraftschluß ist so ausgelegt, daß keine Relativbewegung der Bolzen 3 bzw. 4 in dem Verbinder 13 auftritt. Die Querstifte 7 haben nur die Aufgabe, die richtige Montagelage der Bolzen 3 bzw. 4 im Verbinder 13 gemäß dem Winkel 14 sicherzustellen. Zur Aufnahme von Querkräften, d.h., als Verdrehsicherung für die Bolzen, sind die Stifte 7 nicht vorgesehen.

Nach Fig. 3 verbindet eine Schelle 40 einen gummigelagerten kreisförmigen Bolzen 41 eines Kettenkörpers 42 mit einem Nocken 43 eines Kettenkörpers 44 einer Ein-Gelenkbolzen-Kette 45. Die Schelle 40 ist mittels einer Schraube 46 und einer Spannhülse 47 am Nocken 43 und den angeschweißten Nasen 50 aufweisenden Bolzen 41 versehen. Der Montagewinkel 51 ist doppelt so groß als nach Fig. 1 der Winkel 14.

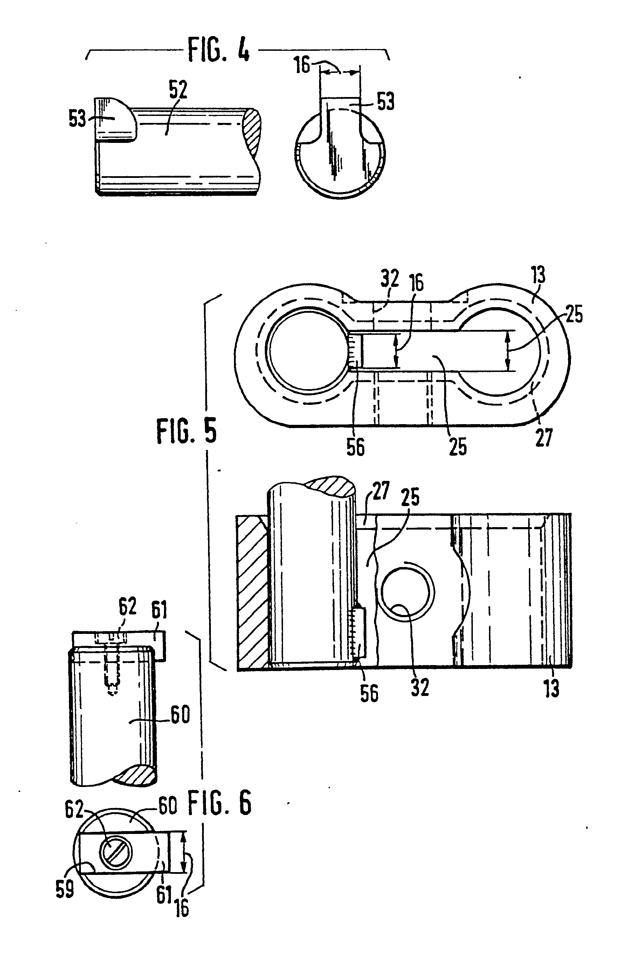

Nach Fig. 4 ist ein Bolzen 52 mit einer durch Kalt- oder Warmverformung gebildeten Nase 53 versehen.

Nach Fig. 5 ist an einem Bolzen 55 eine Nase 56 angeschweißt. Die Nase 56 ragt in den Schlitz 25 des Verbinders 13 hinein.

Nach Fig. 6 ist in eine Nut 59 des Bolzens 60 eine Paßfeder 61 eingesetzt und durch eine Schraube 62 befestigt.

Allen Ausführungsbeispielen ist gemeinsam, daß die Justierelemente 7, 50, 53, 56, 61 geringere Höhe 16 bzw. kleineren Durchmesser aufweisen als der Breite 25 des Schlitzes 24 des Verbinders entspricht. In gleicher Weise sind an dem Verbinder 13 in Bezug auf jede Ausführungsart der Justierelemente 7, 50, 53, 56, 61 die konische Fläche 27 an der Einführungsseite 26 des Verbinders 13 und die in etwa plan-parallelen Führungsflächen angeordnet.

**Patentansprüche**

1. Vorrichtung als Montagehilfe an Gleisketten für Kettenfahrzeuge, deren Kettenkörper (1, 2) bereits mit gummigelagerten Bolzen (3, 4) versehen und über die auf die Enden der Bolzen aufschiebbare, durch eine Schraube (30) festspannbare, schellenartige Verbinder (13) miteinander verbunden sind, wobei in der Montagelage die miteinander zu verbindenden Bolzen mit in einem Schlitz (24) des Verbinders eingreifenden Sicherungselementen versehen sind, dadurch gekennzeichnet, daß jeder einzelne Bolzen (3, 4; 41; 52; 55; 60) mit separaten Justierelementen (7; 50; 53; 56; 61) versehen ist, die nasenförmig über den Bolzenquerschnitt (9) hinausragen, die Justierelemente in Bezug auf die Breite (25) des Schlitzes (24) im gespannten Zustand des Verbinders kleinere Höhe (16) bzw. Durchmesser aufweisen, und an dem Verbinder (13) Führungsflächen (27) zur Vor- und Endjustierung der Justierelemente vorgesehen sind.

2. Vorrichtung nach Anspruch 1, dadurch gekennzeichnet, daß die Justierelemente als Stifte (7) ausgebildet und mit Preßsitz in Bohrungen (8) der Bolzen (3, 4) angeordnet sind <u>oder</u> aus stirnseitig in Nuten (59) gelagerten und festgeschraubten Paßfedern (61) bestehen.

3. Vorrichtung nach Anspruch 1, dadurch gekennzeichnet, daß die Justierelemente am Bolzen (41; 55) als angeschweißte Nasen (50; 56) ausgebildet sind oder aus einstückig am Bolzen (52) ausgeformten Nasen (53) bestehen.

**Claims**

1. A device as an assembly aid on caterpillar tracks for tracked vehicles, the track bodies (1, 2) of which are already provided with rubber-mounted pins (3, 4) and are connected to one another by way of the clip-like connectors (13) which can be pushed onto the ends of the pins and which can be clamped tight by a screw (30), in which respect in the assembly position the pins that are to be connected to one another are provided with securing elements which engage in a slot (24) of the connector, characterised in that each individual pin (3, 4; 41; 52; 55; 60) is provided with separate setting elements (7; 50; 53; 56; 61) which project in a nose-shaped manner beyond the pin cross-member (9), the setting elements have with respect to the width (25) of the slot (24) in the clamped state of the connector a smaller height (16) or respectively diameter, and guide surfaces (27) for the preliminary and final setting of the setting elements are provided on the connector (13).

2. A device according to claim 1, characterised in that the setting elements are designed as pins (7) and are arranged with press fit in bores (8) of the pins (3, 4) OR consist of fitting keys (61) mounted and tightly screwed frontally in grooves (59).

3. A device according to claim 1, characterised in that the setting elements on the pin (41; 55) are designed as welded-on noses (50; 56) or consist of noses (53) formed in one piece on the pin (52).

**Revendications**

1. Dispositif d'aide au montage sur des chenilles de véhicules à chenilles dont les maillons (1, 2) sont pourvus de tourillons (3, 4) montés sur caoutchouc et sont reliés entre eux au moyen des éléments de liaison (13) en forme de brides pouvant être enfilés sur les extrémités des tourillons et être fixé par serrage au moyen d'une vis (30), les tourillons devant être reliés entre eux étant pourvus, dans la position de montage, d'un élément de sécurité pénétrant dans une fente (24) de l'élément de liaison, caractérisé par le fait que chacun des tourillons (3, 4; 41; 52; 55; 60) est pourvu d'élément d'ajustement séparés (7; 50; 53; 60; 61) qui dépassent sous forme de becs au delà de la section du tourillon (9), que les éléments d'ajustement présentent, à l'état serré de l'élément de liaison, une hauteur (16), ou un diamètre plus faible que la largeur (25) de la fente (24) et que des surfaces de guidage (27) pour préajuster et terminer l'ajustement des éléments d'ajustement sont prévues sur l'élément de liaison (13).

2. Dispositif selon la revendication 1, caractérisé par le fait que les éléments d'ajustement sont conformés en chevilles (7) et sont disposés avec serrage dans des alésages (8) des tourillons (3, 4) ou sont constitués par des languettes d'ajustage (61) montées et vissées par leur face frontale dans des rainures (59).

3. Dispositif selon la revendication 1, caractérisé par le fait que les éléments d'ajustement sont formés par des becs (50; 56) soudés sur le tourillon (41; 55) ou par des becs (53) formés seule pièce avec les tourillon (52).

Fig. 1

Fig. 2

FIG. 3

FIG. 4

52

53

16

53

FIG. 5

32  16  13

25

56  25  27

27  25

62  61

56  32  13

60

FIG. 6

62  60

59

61  16